# EUROPÄISCHE PATENTSCHRIFT

(11) **EP 0 809 931 B1**
(45) Veröffentlichungstag und Bekanntmachung des Hinweises auf die Patenterteilung: **17.07.2002**
(21) Anmeldenummer: 97106039.7
(22) Anmeldetag: 12.04.1997
(51) Int. Cl.: A01G 1/00

(54) **Verfahren zur Verwertung von Rübenerde**
Process for using the beet earth
Procédé d'utilisation de la terre des betteraves

(30) Priorität: 31.05.1996 DE 19621807
(43) Veröffentlichungstag der Anmeldung: 03.12.1997
(73) Patentinhaber: SÜDZUCKER AKTIENGESELLSCHAFT MANNHEIM/OCHSENFURT, 68165 Mannheim (DE)
(72) Erfinder: Hofmann, Stefan, 55599 Siefersheim (DE)
(74) Vertreter: Schrell, Andreas, Dr.

(56) Entgegenhaltungen:
- CH-A- 548 152
- DE-C- 3 628 228
- FR-A- 1 378 911
- FR-A- 2 372 589

## Beschreibung

Die Erfindung betrifft ein Verfahren zur Verwertung von Rübenerde, in dessen Verlauf Rollrasen hergestellt wird sowie den verfahrensgemäß hergestellten Rollrasen.

Die Gewinnung von Zucker aus Rüben setzt eine Bearbeitung der von den Landwirten angelieferten Rüben voraus. Dazu gehört das Waschen der Rüben und das anschließende Eindicken des entstehenden Wasser-Erde-Gemisches. Das Eindicken des Wasser-Erde-Gemisches führt zu sogenannter Rübenerde, die in den einzelnen Zuckerfabriken in großer Menge anfällt. Aufgrund der in der Rübenerde enthaltenen organischen Kleinst- und Feinstteile enthält sie verhältnismäßig viel Stickstoff.

Zur landwirtschaftlichen Verwertung von Rübenerde ist es bekannt, diese zum Beispiel auf landwirtschaftlichen Nutzflächen zu verteilen, die vorher mit Getreide bestellt worden waren und auf denen das zurückgebliebene Stroh gehäckselt liegengelassen worden war. Die auf diese Nutzflächen aufgetragene Rübenerde mußte drei Jahre lang pfluglos bearbeitet werden, wobei im ersten Jahr der Fruchtfolge Gras, das geschnitten und abgefahren werden mußte, im Frühjahr des zweiten Jahres wahlweise Körner- oder Silomais und im Anschluß daran Winterweizen angesät wurde. Erst nach der Ernte des Winterweizens im dritten Jahr war die Nutzfläche wieder frei verwendbar. Diese recht komplizierte Bewirtschaftungsart war notwendig, um den in der Rübenerde vorhandenen Stickstoff in den oberen Bodenschichten zu konservieren beziehungsweise zu reduzieren und eine Stickstoff-Verlagerung in die unteren Bodenschichten zu vermeiden. Als nachteilig erweist sich neben der notwendigen pfluglosen Bodenbearbeitung und der rigiden Fruchtfolge auch die notwendige intensive Betreuung durch den Landwirt. Eine anderweitige Verwendung von Rübenerde scheiterte an der sehr massigen kompakten, klumpigen und nassen Struktur der Rübenerde, die sich demgemäß nur sehr schwer oder unter hohem Aufwand verarbeiten beziehungsweise als Pflanzsubstrat verwenden läßt.

Das der Erfindung zugrundeliegende technische Problem liegt also darin, ein Verfahren zur Verwertung von Rübenerde bereitzustellen, das in einfacher und kostengünstiger Weise eine Stickstoff-Konservierung beziehungsweise einen Stickstoff-Entzug in beziehungsweise aus den oberen Bodenschichten gewährleistet.

Das der Erfindung zugrundeliegende Problem wird durch die Merkmale des Hauptanspruchs gelöst, insbesondere durch die Bereitstellung eines Verfahrens zur Verwertung von Rübenerde, wobei a) die Rübenerde auf einer landwirtschaftlichen Nutzfläche ausgebracht, b) Grassamen ausgesät, c) nach Aufwachsen des Grases die oberste Bodenschicht der Nutzfläche mit der Wurzelmasse abgetragen und als Rollrasen verwendet wird und die Schritte a) bis c) wiederholt werden, bis die Rübenerde abgetragen ist. Im Zusammenhang mit der vorliegenden Erfindung wird unter einer landwirtschaftlichen Nutzfläche eine Fläche verstanden, die der landwirtschaftlichen Nutzung zugänglich ist, beispielsweise ein Acker oder ein Beet.

Dieses Verfahren führt in vorteilhafter Weise durch die Bindung von Stickstoff im Gras zu einem Stickstoff-Entzug in der Rübenerde. Eine durch Auswaschung der Rübenerde verursachte Stickstoff-Anreicherung im Grundwasser wird dadurch vermieden. Die Herstellung von Rollrasen aus Rübenerde stellt daher ein verlustarmes und bodenerhaltenes Recycling von Rübenerde dar. In besonders vorteilhafter Weise führt das erfindungsgemäße Verfahren auch zur Erzeugung eines wirtschaftlich verwertbaren Produktes, nämlich von sogenanntem Rollrasen. Unter Rollrasen wird im Zusammenhang mit der vorliegenden Erfindung eine handhabbare Bodenschicht verstanden, auf der Rasen ausgesät und herangezogen wurde. Die Bodenschicht enthält daher das Wurzelwerk des Rasens und wird durch dessen Verflechtung in ihrer Form gehalten. Die Erfindung umfaßt daher auch ein Verfahren zur Herstellung von Rollrasen, wobei a) die Rübenerde auf einer landwirtschaftlichen Nutzfläche ausgebracht, b) Grassamen ausgesät, c) nach Aufwachsen des Grases die oberste Bodenschicht der Nutzfläche mit der Wurzelmasse abgetragen und als Rollrasen verwendet wird. Erfindungsgemäß wird die Herstellung von Rollrasen in besonders vorteilhafter Weise dadurch vereinfacht, daß keine speziellen oder speziell gedüngten Mutterböden zur Herstellung des Rollrasens nötig sind, sondern die Verwendung von in großer Menge verfügbarer Rübenerde vorgesehen ist. Selbstverständlich umfaßt die Erfindung jedoch auch die Verwendung von Rübenerden, die durch Zugabe von Düngern oder Pflanzenschutzmitteln ergänzt wurden. Im Zusammenhang mit der vorliegenden Erfindung wird unter Rübenerde ein durch Waschen der Rüben und anschließendes Eindicken des erzeugten Wasser-Erde-Gemisches entstandenes homogenes Gemisch aus Erden verschiedener Herkunft, Zusammensetzung und Entstehungsgeschichte verstanden. Dieses homogene Gemisch verschiedener Erden existiert in der Natur nicht, sondern bildet sich erst durch die während des Rübenwaschens und des Eindikkens erfolgende Homogenisierung von Erden unterschiedlichster Zusammensetzung und Herkunft. Aufgrund der im Rübenanbau üblichen Düngung und der enthaltenen Rübenfeinst- und Rübenkleinstteile weist die Rübenerde charakteristische Nährstoffgehalte auf. In einer vorteilhaften Ausführungsform der Erfindung wird unter einer Rübenerde eine vorgenannte Erdenmischung verstanden, deren Gesamt-Stickstoff- und Calciumgehalt jeweils 2- bis 3-fach höher als der unbehandelter, natürlicherweise vorkommender Erden ist. Rübenerde weist einen kompakten und massigen Charakter sowie im allgemeinen eine Dichte von 1,4 g/cm³ bis 1,6 g/cm³ auf. Der Trockensubstanzgehalt der Rübenerde liegt bei 45 - 70 Gew.%. In bevorzugter Weise ist auch der Kaliumgehalt 4- bis 5-fach höher als der natürlicherweise vorkommender, unbehandelter Erden. In besonders bevorzugter Weise enthält die erfindungsgemäß verwendete Rübenerde die folgenden Nährstoffgehalte: Gesamt-Stickstoff nach Kjeldahl: 0,12% bis 0,35% (Gew.-% bezogen auf Trockensubstanz) und, nach der EUF/Cal-Methode (Elektro-Ultra-Filtrations-/Calciumammoniumlactat-Methode, Angaben in mg/100 g Boden): Phosphor: 2,5 bis 5,2; Kalium: 52,0 bis 135,0; Magnesium: 2,3 bis 5,2; Kalzium: 74,0 bis 109,0 und Natrium: 2,3 bis 30,1. Der pH-Wert schwankt zwischen 6,5 und 7,9. In bevorzugter Ausführungsform der Erfindung weist die Rübenerde eine Korngrößenzusammensetzung von 15 bis 20 Gew-% Sand, 55 bis 65 Gew.-% Schluff und 17 bis 27 Gew.-% Ton auf, wobei die Korngröße von Ton kleiner als 2 µm, von Schluff kleiner als 62 µm und von Sand größer als 62 µm ist. Der Trockensubstanzgehalt der Rübenerde liegt zwischen 45 und 70 Gewichtsprozent je nachdem, ob die Erde durch Zentrifugieren oder durch Absetzen in Absetzbecken (Kassetten) zum Eindicken gebracht worden ist.

Die Erfindung sieht in besonders bevorzugter Ausgestaltung vor, die Rübenerde auf einer landwirtschaftlichen Nutzfläche aufzubringen, indem sie nach Abkippen auf die Nutzfläche mit geeigneten Vorrichtungen, zum Beispiel Baggerlöffeln, auf eine konstante Höhe eingeebnet wird, die besonders bevorzugt nur um ± 1 cm um die gewünschte Höhe variiert. Anschließend ist besonders bevorzugt vorgesehen, die Rübenerde, je nach Witterung 3 Tage bis 5 Wochen abtrocknen zu lassen, bevor die Graseinsaat erfolgt.

Der erfindungsgemäß zur Verwertung der Rübenerde beziehungsweise zur Herstellung des Rollrasens verwendete Grassamen ist vorzugsweise Samen von Rasensorten, die schnell ein starkes Wurzelwerk entwikkeln, so daß der abgeschälte Rollrasen (Grassoden) eine hohe Festigkeit und damit eine ausreichende Transportfähigkeit und Handhabbarkeit aufweist. In besonders bevorzugter Ausführungsform wird Sportrasen nach der Regel-Saatgut-Mischung, der Zierrasen F102, der zu 100% aus Festuca-Sorten, zum Beispiel Luster-Picnic besteht, der Spiel- und Gebrauchsrasen F101, der aus deutschem Weidelgras, Rotschwingel und Wiesenrispe besteht, Sportrasen F110, der aus Poa protensis und Lolium perenne besteht und/oder Landschaftsrasen F102 nach DIN 18917 sowie Kombinationen dieser Rasensorten verwendet.

In besonders bevorzugter Ausführungsform der Erfindung werden zum Aussäen des Grases Saatstärken von 350 bis 400 kg/ha verwendet.

Die Erfindung sieht in einer weiteren bevorzugten Ausführungsform vor, daß die Rübenerde in einer konstanten Höhe von etwa 5 cm ± 1 cm bis 30 cm ± 1 cm auf die landwirtschaftliche Nutzfläche ausgebracht und anschließend, optional, eingeebnet und gegebenenfalls getrocknet wird. Auf der so präparierten Rübenerde wird der Grassamen ausgesät, das wachsende Gras bei Bedarf bewässert sowie das ganze Jahr über einmal in der Woche geschnitten, wobei das Schnittgras vorzugsweise auf dem Acker verbleibt. In bevorzugter Ausführungsform wird mindestens einmal im Jahr, beispielsweise zwischen Mai und August, die oberste Bodenschicht, vorzugsweise in einer Tiefe von 1 cm bis 3 cm mit der Wurzelmasse abgeschält. Das abgeschälte Produkt wird als Rollrasen bezeichnet und gelangt in den Handel. Bei einem Schälschnitt pro Jahr und einem durchschnittlichen Bodenabtrag von 2,5 cm ist nach zwei bis zwölf Jahren die aufgebrachte Rübenerdemenge abgetragen und damit verwertet. Der Stickstoff ist dabei in den oberen Bodenschichten konserviert beziehungsweise dem Boden entzogen worden und gelangt nicht in untere Bodenschichten oder das Grundwasser.

In besonders bevorzugter Ausführungsform wird die jeweilige oberste Bodenschicht alternierend einoder zweimal jährlich abgetragen, das heißt in einem Jahr zweimal, möglichst einmal früh und einmal spät im Jahr, und im nächsten Jahr in der Mitte des Jahres.

Das erfindungsgemäße Verfahren zur Verwertung von Rübenerde verhindert also in vorteilhafter Weise die unerwünschte Stickstoff-Auswanderung und führt die Rübenerde gleichzeitig einer sinnvollen kommerziell auswertbaren Verwendung, nämlich der Herstellung von Rollrasen, zu. Diese Verfahrensweise ermöglicht eine erheblich vereinfachte Verwertung von Rübenerde, die insbesondere Kostenreduzierungen bei der Betreuung und Bearbeitung der herkömmlicherweise ausgetragenen und verwendeten Rübenerde nach sich zieht.

Die Erfindung wird anhand eines Ausführungsbeispieles näher erläutert.

Nach Anlieferung von Rüben in einer Zuckerfabrik werden diese mit Wasser gewaschen und das erzeugte Wasser-Erde-Gemisch durch Zentrifugieren oder Absetzen zum Eindicken gebracht. Der Trockensubstanzgehalt der eingedickten Rübenerde liegt bei 45 bis 70 Gewichtsprozent, wobei die Rübenerde ein homogenes, in der Natur nicht vorkommendes Gemisch verschiedener Erden darstellt, das einen nassen und massigen Charakter aufweist. Die Dichte der Rübenerde liegt bei 1,4 g/cm³ bis 1,6 g/cm³. Die Korngrößenzusammensetzung beträgt 17 gew.-% Sand, 62 gew.-% Schluff und 22 gew.-% Ton. Die Nährstoffgehalte der Rübenerde stellen sich wie folgt dar: Gesamt-Stickstoff nach Kjeldahl: 0,25 Gew.-% auf die Trockensubstanz bezogen. Nach der EUF/Cal-Methode (Angaben in mg/100 g Boden): Phosphor: 3,6; Kalium: 115,0; Magnesium: 2,3; Kalzium: 99,0 und Natrium: 8,7. Der pH-Wert liegt bei 7,2. Die Rübenerde wird in einem Zwischenlager bis nach der Getreideernte bevorratet, um dann in einer Zeitspanne zwischen Getreideernte und Kampagnebeginn (Juli bis September, beispielsweise August) auf trockene Ackerflächen aufgebracht zu werden. Diese Zeitspanne ist besonders günstig, da dann mit den Transportfahrzeugen keine Bodenstrukturprobleme wie Verdichtungen beim Befahren des Ackers entstehen. Die Rübenerde wird mit Ladefahrzeugen verladen, die eine spezielle für diesen Zweck gefertige Schaufel aufweisen, das heißt die Schaufel weist unter Berücksichtigung der Fließfähigkeit der einen hohen Wassergehalt aufweisenden Rübenerde keine Zähne, sondern eine Schneide auf. Die Transportfahrzeuge, die die tixotrophe Rübenerde transportieren, weisen einen geeigneten, das heißt schlammdichten Fahrzeugaufbau auf, der mit einem speziell dafür entwickelten Klappen-Verschlußmechanismus zur Abdichtung versehen ist. Die Rübenerde wird auf dem Acker rückwärts abgekippt und sofort mit einem Löffelbagger auf eine Schichtstärke von konstant 15 cm verteilt. Das Verteilgerät fährt dabei nicht durch die frisch abgekippte Rübenerde, sondern glättet die Rübenerde mit einem Baggerlöffel mit einer Breite von 2,50 m bis 3 m, der die Rübenerde einebnet. Der Baggerlöffel weist eine Vorrichtung auf, mit deren Hilfe nicht nur die gewünschte Erdhöhe, sondern darüber hinaus auch ein absolutes Planum von ± 1 cm erreicht werden kann. Durch diesen Vorgang wird die Rübenerde in ihrer Struktur nicht negativ beeinflußt, so daß später auch ein gleichmäßiges Pflanzenwachstum gewährleistet ist. Anschließend wird die Rübenerde liegengelassen, um ein natürliches Ab- beziehungsweise Austrocknen zu gewährleisten. Die Graseinsaat kann 3 bis 5 Tage nach der Erdausbringung mit einem umgebauten Pistenbully (bekannt aus der Skipistenpräparation) erfolgen. Alternativ kann die Graseinsaat auch ca. 3 bis 5 Wochen nach dem oberflächlichen Abtrocknen der Rübenerde mit einem Spezialschlepper mit Terra-Bereifung erfolgen, was aber bei schwierigen Witterungsverhältnissen, zum Beispiel Regen, nicht immer möglich ist. Es wird ein Grassamengemisch des Zierrasens F102 (100% Festuca-Sorten) in einer Saatstärke von 370 kg/ha zur Ansaat gebracht und sofort eine Beregnung der Fläche durchgeführt. Gegebenenfalls kann nach der Aussaat vorgesehen sein, die Ackerfläche ein weiteres Mal einzuebnen. Die landwirtschaftliche Nutzfläche ist nach wenigen Tagen begrünt, wobei über die Sommermonate das Gras regelmäßig bei Bedarf, gegebenenfalls mehrmals pro Woche, bewässert werden muß, um einen einwandfreien Aufwuchs zu erzeugen. Das Gras wird das ganze Jahr über einmal pro Woche geschnitten, wobei das Schnittgras auf der Nutzfläche verbleibt. Im ersten Jahr, vorzugsweise zwischen Mai und August, wird die oberste Schicht in einer Tiefe von 2 cm bis 3 cm zusammen mit der Wurzelmasse einmal abgeschält. Die Rasenschälmaße betragen beispielsweise 40 cm x 250 cm und das Gewicht einer Rolle dieses Rollrasens circa 15 kg/m²/Rolle bis 20 kg/m²/Rolle. Im darauffolgenden Jahr wird zweimal im Jahr die jeweilige oberste Bodenschicht inclusive der Wurzelmasse abgeschält und als Rollrasen gewonnen. Im dritten Jahr wird der Boden einmal abgeschält und im vierten Jahr zweimal. Nach drei bis vier Jahren ist die aufgebrachte Rübenerdemenge abgetragen und als Rollrasen verwertet.

Selbstverständlich ist es auch möglich, die Rübenerde zur Herstellung von Rollrasen zu verwenden, indem der Rasen auf oder in festen Trägern vorhandene Rübenerde angesät wird. Die Verwendung eines festen Trägers wie beispielsweise Schaumstoff, Textilgewebe, verrottbarem Kunststoffmaterial oder ähnliches hat den Vorteil, daß der Transport und das Abschälen des Rollrasen vereinfacht wird sowie gegebenenfalls, bei Verwendung wasserspeichernder fester Träger die Bewässerung und/oder Düngung vereinfacht wird.

## Patentansprüche

1. Verfahren zur Verwertung von Rübenerde, wobei
a) die Rübenerde auf einer landwirtschaftlichen Nutzfläche aufgebracht,
b) Grassamen ausgesät,
c) nach Aufwachsen des Grases die oberste Bodenschicht der Nutzfläche mit: der Wurzelmasse abgetragen und als Rollrasen verwendet wird und
die Schritte a) bis c) wiederholt werden, bis die Rübenerde abgetragen ist.

2. Verfahren zur Herstellung von Rollrasen, wobei
a) Rübenerde auf einer landwirtschaftlichen Nutzfläche aufgebracht,
b) Grassamen ausgesät,
c) nach Aufwachsen des Grases die oberste Bodenschicht der Nutzfläche mit der Wurzelmasse abgetragen und als Rollrasen verwendet wird.

3. Verfahren nach einem der Ansprüche 1 oder 2, **dadurch gekennzeichnet, daß** die Rübenerde folgende Nährstoffgehalte in mg/100 g Boden nach der EUF/Cal-Methode aufweist : 2,5 bis 5,2 Phosphor, 52,0 bis 135,0 Kalium, 2,3 bis 5,2 Magnesium, 74,0 bis 109,0 Kalzium, 2,3 bis 30,1 Natrium und bezogen auf die Trockensubstanz 0,12 bis 0,35 Gew.-% Gesamt-Stickstoff nach Kjeldahl.

4. Verfahren nach einem der Ansprüche 1 bis 3, **dadurch gekennzeichnet, daß** die Rübenerde eine Korngrößenzusammensetzung von 15 gew.-% bis 20 gew.-% Sand, 55 gew.-% bis 65 gew.-% Schluff und 17 gew.-% bis 27 gew.-% Ton aufweist.

5. Verfahren nach einem der Ansprüche 1 bis 4, **dadurch gekennzeichnet, daß** Saatstärken von 350 kg bis 400 kg/ha zur Aussaat des Grases verwendet werden.

6. Verfahren nach einem der Ansprüche 1 bis 5, **dadurch gekennzeichnet, daß** die Rübenerde in einer Höhe von 5 cm bis 30 cm auf die landwirtschaftliche Nutzfläche aufgebracht wird.

7. Verfahren nach einem der Ansprüche 1 bis 6, **dadurch gekennzeichnet, daß** die Rübenerde in konstanter Höhe aufgebracht wird, die maximal ± 1 cm um die gewünschte konstante Höhe schwankt.

8. Verfahren nach einem der Ansprüche 1 bis 7, **dadurch gekennzeichnet, daß** die Rübenerde aufgebracht wird, indem sie mittels einer geeigneten Planiervorrichtung auf die gewünschte Höhe eingeebnet wird.

9. Verfahren nach einem der Ansprüche 1 bis 8, **dadurch gekennzeichnet, daß** die Rübenerde nach dem Einebnen 3 Tage bis 5 Wochen abtrocknet bevor Grassamen ausgesät wird.

10. Verfahren nach einem der Ansprüche 1 bis 9, **dadurch gekennzeichnet, daß** die oberste Bodenschicht ein- oder zweimal pro Jahr abgetragen wird.

11. Verfahren nach einem der Ansprüche 1 bis 10, **dadurch gekennzeichnet, daß** die oberste Bodenschicht jährlich alternierend ein- oder zweimal abgetragen wird.

12. Verfahren nach einem der Ansprüche 1 bis 11, **dadurch gekennzeichnet, daß** das Gras während des Aufwachsens einmal wöchentlich geschnitten wird.

13. Rollrasen, hergestellt nach einem der Verfahren der Ansprüche 1 bis 12, **dadurch gekennzeichnet, daß** der Rasen auf Rübenerde angewachsen ist.

## Claims

1. Method for using beet earth,
a) the beet earth being applied on agriculturally productive land,
b) grass seed being sown,
c) after the grass has grown, the topmost layer of soil of the productive land with the root mass being stripped off and being used as rolled turf and
the steps a) to c) being repeated until the beet earth is stripped off.

2. Method for producing rolled turf,
a) beet earth being applied on agriculturally productive land,
b) grass seed being sown,
c) after the grass has grown, the topmost layer of soil of the productive land with the root mass being stripped off and being used as rolled turf.

3. Method according to one of the claims 1 or 2, **characterised in that** the beet earth has the following nutrient contents in mg/100 g soil, according to the EUF/Cal method: 2.5 to 5.2 phosphorus, 52.0 to 135.0 potassium, 2.3 to 5.2 magnesium, 74.0 to 109.0 calcium, 2.3 to 30.1 sodium and, relative to the dry substance, 0.12 to 0.35% by weight total nitrogen according to Kjeldahl.

4. Method according to one of the claims 1 to 3, **characterised in that** the beet earth has a particle size composition of 15% by weight to 20% by weight sand, 55% by weight to 65% by weight coarse clay and 17% by weight to 27% by weight clay.

5. Method according to one of the claims 1 to 4, **characterised in that** seed amounts of 350 kg to 400 kg/ha are used for sowing the grass.

6. Method according to one of the claims 1 to 5, **characterised in that** the beet earth is applied at a level of 5 cm to 30 cm to the agriculturally productive land.

7. Method according to one of the claims 1 to 6, **characterised in that** the beet earth is applied at a constant level, which at most fluctuates ± 1 cm about the desired constant level.

8. Method according to one of the claims 1 to 7, **characterised in that** the beet earth is applied by being levelled to the desired level by means of a suitable levelling device.

9. Method according to one of the claims 1 to 8, **characterised in that** the beet earth is dried for 3 days to 5 weeks after levelling before grass seed is sown.

10. Method according to one of the claims 1 to 9, **characterised in that** the topmost layer of soil is stripped off once or twice per year.

11. Method according to one of the claims 1 to 10, **characterised in that** the topmost layer of soil is stripped off alternately once or twice yearly.

12. Method according to one of the claims 1 to 11, **characterised in that** the grass is cut once per week whilst growing.

13. Rolled turf, produced according to one of the methods of claims 1 to 12, **characterised in that** the turf is grown on beet earth.

## Revendications

1. Procédé d'exploitation de terre de betteraves selon lequel :
a) les terres de betteraves sont appliquées sur une surface utilisable agricole,
b) on ensemence les semences d'herbe,
c) on enlève après pousse du gazon, la couche de sol supérieure de la surface utilisable avec la masse de racines et on l'utilise comme gazon roulé, et
on répète les étapes a) à c) jusqu'à ce que la terre à betteraves soit enlevée.

2. Procédé de préparation de gazon roulé dans lequel :
a) on applique la terre de betteraves sur une surface utilisable agricole,
b) on ensemence les graines de gazon,
c) on enlève après pousse du gazon, la couche de sol supérieure de la surface utilisable avec la masse de racines et on l'utilise comme gazon roulé.

3. Procédé selon l'une des revendications 1 ou 2,
**caractérisé en ce que**
la terre de betteraves possède les teneurs en substances nutritives suivantes en mg 100 g de sols, selon la méthode EUF/Cal),
de 2,5 à 5,2 de phosphore
de 52,0 à 135,0 de potassium
de 2,3 à 5,2 de magnésium
de 74,0 à 109,0 de calcium
de 2,3 à 30,1 de sodium
et rapporté à la substance sèche de 0,12 à 0,35 % en poids d'azote total déterminé selon la méthode de Kjeldahl.

4. Procédé selon l'une quelconque des revendications 1 à 3,
**caractérisé en ce que**
la terre de betteraves possède une composition de tailles de grains allant de 15 % en poids à 20 % en poids de sable, de 55 % en poids à 65 % en poids d'ardoise et de 17 % en poids à 27 % en poids d'argile.

5. Procédé selon l'une quelconque des revendications 1 à 4,
**caractérisé en ce qu'**
on utilise des densités de semences de 350 kg/ha à 400kg/ha en vue de l'ensemencement du gazon.

6. Procédé selon l'une quelconque des revendications 1 à 5,
**caractérisé en ce que**
la terre de betteraves est appliquée à une hauteur de 5 cm à 30 cm sur la surface utilisable agricole.

7. Procédé selon l'une quelconque des revendications 1 à 6,
**caractérisé en ce que**
la terre de betteraves est appliquée avec une hauteur constante qui varie d'au maximum ± 1 cm autour de la hauteur constante désirée.

8. Procédé selon l'une quelconque des revendications 1 à 7,
**caractérisé en ce qu'**
on applique la terre de betteraves, dans lequel on aplanit à l'aide d'un dispositif de nivellement approprié, à la hauteur désirée.

9. Procédé selon l'une quelconque des revendications 1 à 8,
**caractérisé en ce qu'**
on dessèche la terre de betteraves après l'aplanissement, de 3 jours à 5 semaines avant que les graines de gazon soient ensemencées.

10. Procédé selon l'une quelconque des revendications 1 à 9,
**caractérisé en ce qu'**
on enlève la couche supérieure de sol une ou deux fois par an.

11. Procédé selon l'une quelconque des revendications 1 à 10,
**caractérisé en ce qu'**
on enlève la couche supérieure de sol annuellement en alternant une ou deux fois.

12. Procédé selon l'une quelconque des revendications 1 à 11,
**caractérisé en ce qu'**
on coupe le gazon pendant la pousse une fois par semaine.

13. Gazon roulé produit selon un des procédés selon l'une quelconque des revendications 1 à 12,
**caractérisé en ce que**
le gazon est mis à pousser sur la terre de betteraves.
